# EUROPEAN PATENT APPLICATION

(11) **EP 3 677 695 A1**
(43) Date of publication of application: **08.07.2020**
(21) Application number: 17923731.8
(22) Date of filing: 08.09.2017
(51) Int. Cl.: C22B 23/06, C22B 3/00, C22B 23/02

(54) **METHOD FOR ECONOMICALLY SMELTING NICKEL FROM NICKEL LATERITE ORES BY COMBINATION OF WET AND DRY PROCESSES**

(30) Priority: 31.08.2017 KR 20170111411
(71) Applicant: Korea Zinc Co., Ltd., Seoul 06110 (KR); Korea Nickel Corporation, Seongnam-si, Gyeonggi-do 13229 (KR)
(72) Inventor: CHOI, Chang Young, Seoul 06010 (KR); KIM, Byoung-Moon, Ulsan 44534 (KR)
(74) Representative: Lavoix
(86) International application number: PCT/KR2017/009900
(87) International publication number: WO 2019/045161

(57) **Abstract**

It is disclosed that an economical nickel recovery process combining hydrometallurgical and pyrometallurgical processes from nickel oxide ore, comprises: preparing a solution by dissolving a mixed hydroxide comprising nickel and impurities in a strong acid; separating impurities by introducing an organic material into the solution; obtaining a nickel oxide by introducing a first neutralizing agent into a raffinate in which the impurities are separated, and calcining the raffinate; producing a nickel product by reducing the nickel oxide.

## Description

### [Technical field]

The present invention relates to a method for producing nickel using a laterite ore, which is one of the nickel raw materials.

### [Background]

A commercially pyrometallurgical process of producing nickel by treating laterite ore is a method of producing ferronickel through drying, reduction, roasting, electric furnace smelting and refining processes.

After dissolving ore in an autoclave for leaching using sulfuric acid under high temperature and high pressure, impurities are removed by neutralization treatment, and nickel and cobalt are separated by precipitation and re-dissolved. Then, through solvent extraction, H₂S gas is injected to produce nickel and cobalt as target metals.

Herein, the method of precipitating nickel is a method of producing mixed sulfide precipitate (MSP) by precipitating nickel sulfide by injecting H₂S gas; or producing mixed hydroxide precipitate (MHP) by neutralization method;.

Laterite ores mainly used in nickel pyrometallurgical process are saprolite (Ni: 1.8 ∼ 3.0%, Fe: 10 ∼ 25%, MgO: 15 ∼ 35%). The iron content of the laterite ores is lower and the MgO content is higher than limonite (Ni: 0.8 ∼ 1.5%, Fe: 40 ∼ 50%, MgO: 0.5 ∼ 5%) which is mainly used in nickel hydrometallurgical process .

The most unreasonable point in pyrometallurgical process of the oxide ore is the low nickel content and the relatively large amount of slag generated by the gangue.

In order to obtain the nickel of about 3% or less, all of the remaining gangue components must be removed by using heat.

The most unreasonable point of the hydrometallurgical process of the oxide ore is the manufacturing cost is high by an excessive refining for unnecessary purity due to the most demanded stainless steel manufacturing (about 10 ∼ 14% Ni alloy).

In fact, the advantages of high-purity nickel metal in terms of the most demanding stainless steel producers are small, so there is little added value in comparison with low-purity nickel.

On the other hand, the manufacturing process is complicated, so that the economic feasibility of nickel recovery business is deteriorating due to the increase in production costs without increasing sales profits.

Therefore, the future nickel recovery business requires the development of a process that can produce nickel metal which is higher in purity than the current ferronickel and which is suitable for manufacturing stainless steel, but which can simplify the process and lower the manufacturing cost.

### [Description]

### [Problem to solve]

The present invention relates to a method for producing nickel metal by treating a laterite ore, which is one of nickel raw materials.

### [Solution to problem]

According to an embodiment of the present invention, an economical nickel recovery process combining hydrometallurgical and pyrometallurgical processes from nickel oxide ore, comprises:
preparing a solution by dissolving a mixed hydroxide comprising nickel and impurities in a strong acid;
separating impurities by introducing an organic material into the solution;
obtaining a nickel oxide by introducing a first neutralizing agent into a raffinate in which the impurities are separated, and calcining the raffinate; and
producing a nickel product by reducing the nickel oxide.

Prior to the step of preparing the solution, the process can further comprise producing the mixed hydroxide by leaching a raw material comprising ore into a strong acid and neutralizing.

Wherein, the step of separating the impurities can comprise:
preparing an organic compound comprising the impurities by adding an organic material to the solution; and
preparing a raffinate by separating the organic compound.

Wherein, the step of preparing the organic compound can comprise: adjusting the pH of the solution to 4 to 6 by adding Na₂CO₃ to the solution into which the organic material is added.

After the step of preparing the raffinate, the process can further comprise:
preparing a stripping solution by adding sulfuric acid to the organic compound; and
forming a cobalt precipitate by introducing a second neutralizing agent into the stripping solution.
In the step of forming the cobalt precipitate, wherein, the second neutralizing agent is Na₂CO₃, and a first cobalt product comprising CoCO₃ is obtained.

In the step of forming the cobalt precipitate, wherein, the second neutralizing agent is NaSH, and a second cobalt product comprising CoS is obtained.

A pH of the stripping solution to which NaSH is added may be adjusted to 4 to 5.

The step of obtaining the nickel oxide can comprise:
preparing a reaction product by reacting the raffinate and the first neutralizing agent at a temperature of 70 °C or higher;
reducing a sulfur content in the reaction product by washing the reaction product; and
obtaining a nickel oxide by calcining the reaction product in which sulfur content is reduced.

In the step of preparing the reaction product, wherein, the first neutralizing agent is Na₂CO₃ and a pH of the solution comprising the reaction product may be adjusted to 7 to 9.

In the step of reducing the sulfur content, the reaction product is repeatedly washed with water comprising NaOH.

In the step of obtaining a nickel oxide by calcining the reaction product, the reaction product may be calcined and pyrolyzed at a temperature of 400 °C or more for 30 minutes or more.

In the step of preparing a solution, wherein, the strong acid is sulfuric acid and a pH of the solution may be adjusted to 1 to 2.

Wherein, the step of producing the mixed hydroxide can comprise:
preparing an leachate by pressurizing and leaching the raw material into sulfuric acid;
producing a neutralized filtrate by adding CaO or CaCO₃ to the leachate; and
producing the mixed hydroxide by adding MgO to the neutralized filtrate.

In the step of producing the nickel product, the nickel oxide may be charged into an electric furnace and reduced at a temperature of 1,500 to 1,700 °C.

### [Effect]

According to the economical nickel recovery method combining the hydrometallurgical and pyrometallurgical processes from the nickel oxide ore according to the present invention, it is possible to manufacture nickel having a purity of 97% or more by applying the hydrometallurgical process and the Pyrometallurgical process simultaneously.

In addition, the process is simplified, and nickel of purity suitable for the production of stainless steel can be produced instead of unnecessarily excessive purity.

As a result, the manufacturing cost can be reduced and the productivity can be improved.

### [Brief description of drawings]

FIG. 1 is an entire process of an economical nickel recovery process in which a hydrometallurgical process and a pyrometallurgical process are combined from the nickel oxide ore according to the present invention.
FIG. 2 is a graph showing a selective metal extraction ratio according to pH in the step of separating impurities in an economical nickel recovery process in which hydrometallurgical and pyrometallurgical processes are combined from nickel oxide ore according to the present invention.
FIG. 3 is a graph showing the solubility of metal sulfides according to the pH of the stripping solution in the process of producing cobalt products in an economical nickel recovery process in which hydrometallurgical and pyrometallurgical processes are combined from nickel oxide ore according to the present invention.
FIG.4 shows the XRD results of the second cobalt product in the economical nickel recovery process in which the hydrometallurgical and pyrometallurgical processes are combined from the nickel oxide ore according to the present invention.
FIG. 5 is a pyrolysis graph according to a calcination temperature in the step of obtaining a nickel oxide in an economical nickel recovery process in which a hydrometallurgical process and a pyrometallurgical process are combined from the nickel oxide ore according to the present invention.

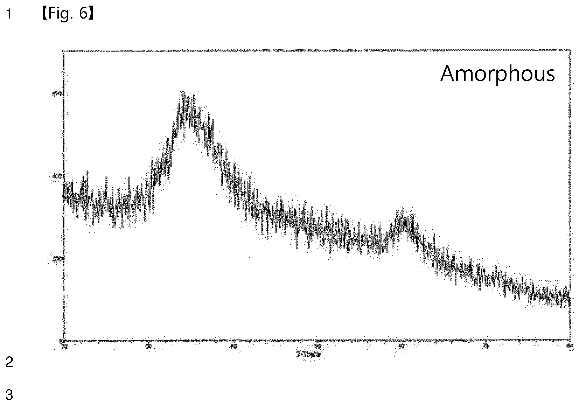

FIG. 6 is a graph showing the XRD results of the reaction products after washing in an economical nickel recovery process in which a hydrometallurgical process and a pyrometallurgical process are combined from the nickel oxide ore according to the present invention.
FIG. 7 shows XRD results of nickel oxide in an economical nickel recovery process in which a hydrometallurgical process and a pyrometallurgical process are combined from the nickel oxide ore according to the present invention.

### [Detailed description of the invention]

Hereinafter, various embodiments of the present invention will be described in detail with reference to the accompanying drawings so that those skilled in the art can easily carry out the present invention.

The present invention may be embodied in many different forms and is not limited to the embodiments described herein.

In order to clearly illustrate the present invention, parts not related to the description are omitted, and the same or similar components are denoted by the same reference numerals throughout the specification.

Also, throughout the specification, when an element is referred to as "comprising" an element, it is understood that the element may include other elements as well, without departing from the other elements unless specifically stated otherwise.

### An economical nickel recovery process combining hydrometallurgical and pyrometallurgical processes from nickel oxide ore

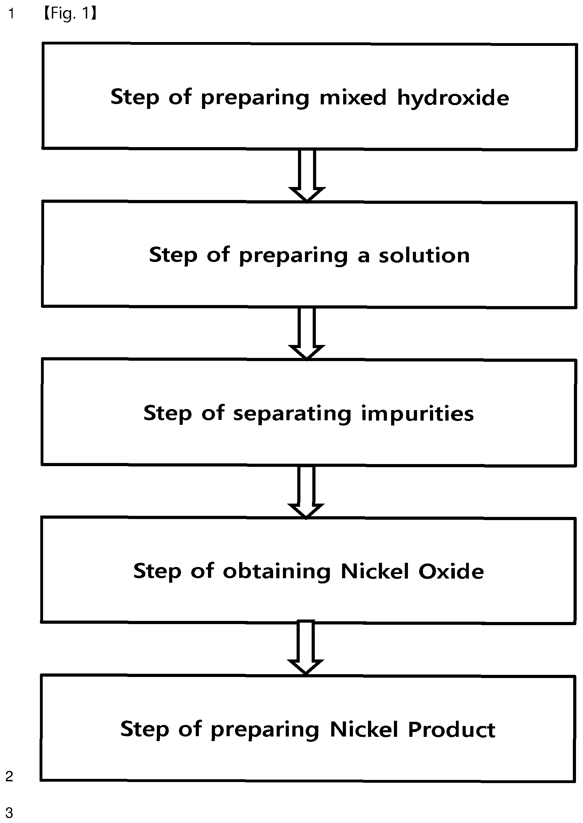

As shown in FIG. 1, the economical nickel smelting method combining the hydrometallurgical and pyrometallurgical processes from the nickel oxide ore according to the present invention comprises the steps of producing a mixed hydroxide, preparing a solution, separating impurities, obtaining a nickel oxide, and producing a nickel product.

In the step of producing the mixed hydroxide, a raw material containing ore are leached into a strong acid and neutralized to produce the mixed hydroxide.

Wherein, the step of producing the mixed hydroxide can include: prepare a leachate by pressurizing and leaching the raw material into sulfuric acid; produce a neutralized filtrate by adding CaO or CaCO₃ to the leachate; and produce the mixed hydroxide by adding MgO to the neutralized filtrate.

The ores included in the raw material may be nickel oxide ore, among which are laterite ores.

Generally, the components of the laterite ores can be expressed as follows.

The total weight is expressed as 100%, and the remainder is composed of other unavoidable impurities.
Nickel (Ni): 0.8 to 3.0%, Cobalt (Co): 0.01 to 0.15%, Iron (Fe): 14 to 48%, Magnesium (Mg): 1.0 to 15%, Manganese (Mn): 0.4 to 0.74% Zinc (Zn): 0.01 to 0.05%, Aluminum (Al): 2.5 to 4.54%, and Silica (SiO₂): 3.7 to 4.6%

The raw material containing the above-mentioned laterite ore can be pressurized and leached into sulfuric acid.

At a temperature of 240 to 270 °C, pressure leaching can be performed at a pressure of 33 to 55 atm.

The amount of sulfuric acid used may be 200 to 500 kg/T Ni.

On the other hand, the reaction at this time can be expressed as the following reaction formula.

Ni(OH)₂(s) + H₂SO₄(l) -> NiSO₄(aq) + 2H₂O(l)

Co(OH)₂(s) + H₂SO₄(l) -> CoSO₄(aq) + 2H₂O(l)

2FeOOH(s) + 3H₂SO₄(l) -> Fe₂(SO₄)₃(aq) + 4H₂O(l)

Part of the iron (Fe) present in the Fe₂(SO₄)₃ (aq) state together with the above reaction can be precipitated in the form of hematite or jarosite as shown in the following reaction formula.

Fe₂(SO₄)₃(aq) + 3H₂O(l) -> Fe₂O₃(s) + 3H₂SO₄(aq)

3Fe₂(SO₄)₃(aq) + 14H₂O(l) -> 2[H₃OFe₃(SO₄)₂(OH)₆](s) + 5H₂SO₄(aq)

The neutralized filtrate can be prepared by adding CaO or CaCO₃ to the leachate in which the iron is precipitated as described above.

At this time, the pH can be controlled to 3 to 4.

A part of iron present in the Fe₂(SO₄)₃ (aq) state in the leachate can react with CaO or CaCO₃, and can be expressed by the following reaction formula.

H₂SO₄(aq) + CaCO₃(s) + H₂O(l) -> CaSO₄^{∗}2H₂O(s) + CO₂(g)

H₂SO₄(aq) + CaO(s) + H₂O(l) -> CaSO₄^{∗}2H₂O(s)

Fe₂(SO₄)₃(aq) + 3CaCO₃(s) + 9H₂O(l) -> 2Fe(OH)₃(s) + 3(CaSO₄^{∗}2H₂O)(s) + 3CO₂(g)

Through such a reaction, components such as aluminum (Al), silica (SiO₂), chromium (Cr) and gypsum, which are treated as impurities, can be removed by precipitation and filtration.

Next, the mixed hydroxide can be prepared by adding MgO to the neutralized filtrate.

At this time, the pH can be controlled to 7 to 8.

Nickel (Ni) existing in the state of NiSO₄ (aq) and Cobalt (Co) existing in the state of Co(SO)₄ (aq) in the neutralized filtrate can react with MgO and expressed by the following reaction formula .

NiSO₄(aq) + MgO(s) + H₂O(l) -> Ni(OH)₂(s) + MgSO₄(aq)

Co(SO)₄(aq) + MgO(s) + H₂O(l) -> Co(OH)₂(s) + MgSO₄(aq)

In addition to nickel and cobalt, magnesium, manganese and zinc can be precipitated in hydroxide form.

Cobalt hydroxide, magnesium hydroxide, manganese hydroxide and zinc hydroxide can conveniently be treated as impurity metal hydroxides.

The preparation of mixed hydroxides comprising nickel and impurities can be performed.

This can be expressed as Mixed Hydroxide Precipitate (MHP) Cake.

The composition of mixed hydroxides can be expressed as follows.

The total weight is expressed as 100%, and the remainder is composed of other unavoidable impurities.
Nickel (Ni): 32 to 40%, Cobalt (Co): 0.04 to 2.5%, Magnesium (Mg): 0.55 to 3.5%, Manganese (Mn): 0.02 to 5.0%, Zinc (Zn): 0.01 to 0.5% Silicon (Si): not more than 0.5%, Copper (Cu): not more than 0.01%, Calcium (Ca): not more than 0.2%, Aluminum (Al): not more than 0.05%, Chromium (Cr): not more than 0.01%, and Sulfur (S): not more than 3.8%

In the step of preparing the solution through the step of producing mixed hydroxides, the mixed hydroxides containing nickel and impurities are dissolved in strong acids.

Specifically, the strong acid is sulfuric acid, and the pH of the solution can be adjusted to 1 to 2.

At this time, a step of preparing a solution can be performed for about 3 hours at a reaction temperature of 60 to 70 °C, and the reaction of cobalt hydroxide and sulfuric acid in nickel hydroxide and impurity metal hydroxide can be expressed by the following reaction formula.

Ni(OH)₂(s) + H₂SO₄(l) -> NiSO₄(aq) + 2H₂O(l)

Co(OH)₂(s) + H₂SO₄(l) -> CoSO₄(aq) + 2H₂O(l)

In the step of separating the impurities through the step of producing the solution, an organic material is added to the solution to separate the impurities.

Specifically, the method may include a step of adding an organic material to the solution to prepare an organic compound containing the impurity, and a step of separating the organic compound to prepare a raffinate.

Further, after the step of preparing the raffinate, the method may further include a step of adding a sulfuric acid to the organic compound to prepare a stripping solution, and a step of adding a second neutralizing agent to the stripping solution to form a cobalt precipitate.

Cobalt, Magnesium, Manganese, and Zinc in the solution are reacted with an organic material using solvent extraction (S/X).

At this time, the organic material is cyanex 272, and the pH of the solution can be adjusted to 5 to 6 through the addition of Na₂CO₃.

The reaction of cobalt and organic material in impurities can be expressed by the following reaction formula.

2(RH)₂(org) + CoSO₄(aq) -> CoR₂(RH)₂(org) + H₂SO₄(aq)

H₂SO₄ + Na₂CO₃ -> Na₂SO₄ + H₂O +CO₂

Organic compounds including impurities as well as organic compounds including nickel are produced.

Thus, scrubbing the organic compound containing nickel with water or a solution of CoSO₄ can cause the reaction represented by the following reaction formula.

NiR₂(RH)₂(org) + CoSO₄(aq) -> CoR₂(RH)₂(org) + NiSO₄(aq)

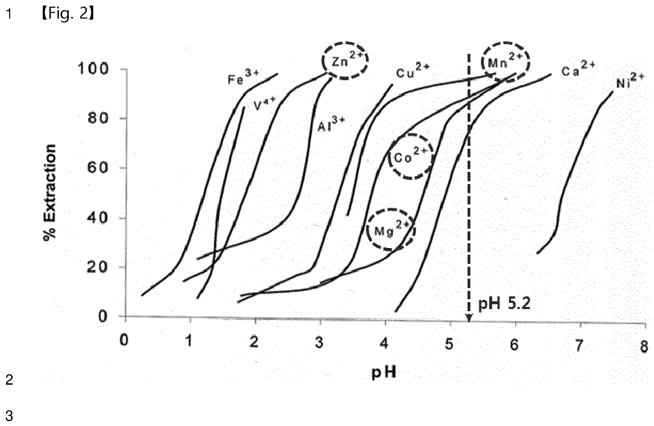

As can be seen in FIG. 2, the selective extraction rate by cyanex 272 varies depending on the pH of the solution containing the organic compound.

The extraction rate of nickel is low in the range of pH 5 to 6, while the extraction ratio of cobalt, magnesium, manganese and zinc is 70% or more.

Among them, the extraction ratio of cobalt, magnesium and manganese is more than 95%.

Specifically, the extraction ratios of each metal by cyanex 272 at pH 5 to 6 are shown in Table 1 below.

**[Table 1]**

| | Ni | Co | Mg | Mn | Zn |
|---|---|---|---|---|---|
| Extraction ratio (%) | 1.79 | 97.5 | 70.8 | 99.5 | 99.9 |

Next, the organic compound is separated to produce a raffinate containing nickel.

On the other hand, cobalt products can be prepared from separated organic compounds to produce cobalt, a valuable metal, as a product.

First, a stripping filtrate can be prepared by adding sulfuric acid to the organic compound.

The stripping solution may include a cobalt organic compound, a magnesium organic compound, a manganese organic compound, and a zinc organic compound.

The stripping reaction with the cobalt organic compound by sulfuric acid can be represented by the following reaction formula.

CoR₂(RH)₂(org) + H₂SO₄(aq) -> 2(RH)₂(org) + CoSO₄(aq)

Thereafter, a second neutralizing agent may be added to the stripping solution containing CoSO₄ to form a cobalt precipitate.

When the second neutralizing agent is Na₂CO₃, the first cobalt product comprising CoCO₃ can be obtained through the following reaction formula.

CoSO₄(aq) + Na₂CO₃ -> CoCO₃(s) + Na₂SO₄(aq)

The pH of the stripping solution to which Na₂CO₃ is added may be adjusted to 8 to 10, and the reaction temperature may be 70 to 90 °C.

The first cobalt product is not pure CoCO₃ but is generally mixed with Co(OH)₂, that is, Basic Cobalt carbonate (xCoCO₃ • yCo(OH)₂ • zH₂O).

The first cobalt product in a state mixed with CoCO₃ and Co(OH)₂ can be sold as a product without further refining.

When the second neutralizing agent is NaSH, a second cobalt product containing CoS can be obtained through the following reaction formula.

2CoSO₄(aq) + 2NaSH -> 2CoS(s) + Na₂SO₄(aq) + H₂SO₄

H₂SO₄ + Na₂CO₃ -> Na₂SO₄(aq) + H₂O + CO₂

The pH of the stripping solution to which NaSH is added can be adjusted to 4 to 5, and the reaction can be carried out at a reaction temperature of 70 to 90 °C for about 3 hours.

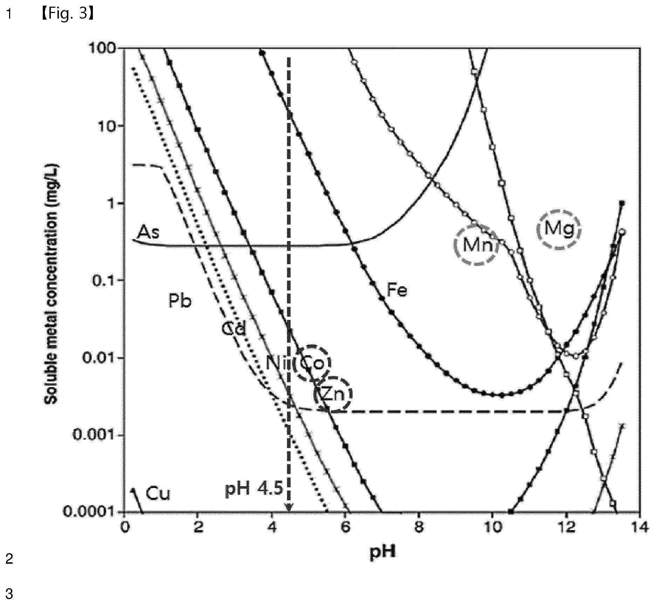

As can be seen in FIG. 3, the pH of the stripping solution can be adjusted to take advantage of the solubility differences of cobalt sulfide, magnesium sulfide, manganese sulfide and zinc sulfide.

The solubility of cobalt sulfide and zinc sulfide in the range of pH 4 to 5 is as low as 0.01 mg/L or less, while the solubility of magnesium sulfide and manganese sulfide is very high, so that magnesium sulfide and manganese sulfide are not be precipitated in the stripping solution.

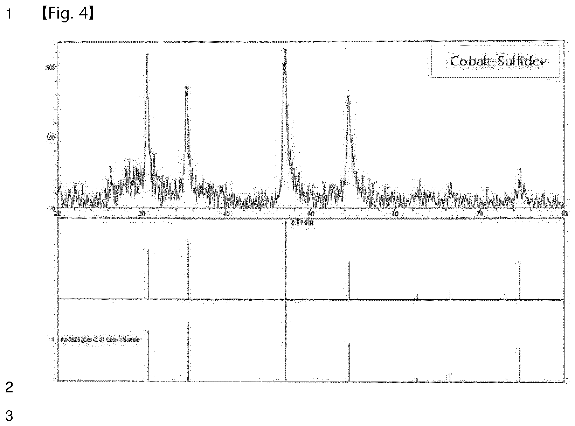

As can be seen from FIG. 4, the second cobalt product has high cobalt content and low impurity content and can be sold as a product.

In the step of obtaining the nickel oxide, the first neutralizing agent is added to the raffinate in which the impurities are separated, and the nickel oxide is obtained by calcination.

Specifically, the process comprises reacting the raffinate and the first neutralizing agent at a temperature of 70 °C or higher to prepare a reaction product, washing the reaction product with water to reduce the sulfur content in the reaction product, and calcining the reaction product to obtain nickel oxide.

The first neutralizing agent is added to the raffinate in which the impurities are removed such as cobalt and the like to form a reaction product in which the nickel is precipitated in carbonate form at a temperature of 70 °C or more.

Wherein the first neutralizing agent is Na₂CO₃ and the pH of the solution containing the reaction product can be adjusted to 7 to 9.

When the reaction temperature is less than 70 °C, the filtration time is increased due to the formation of fine particles, so that the removal rate of sulfur in the post-washing step may be reduced.

The reaction formula in which nickel and Na₂CO₃ react in the raffinatecan be expressed as follows.

NiSO₄(aq) + Na₂CO₃ -> NiCO₃ + Na₂SO₄(aq)

The reaction products are not pure NiCO₃ but are in a state of being mixed with Ni(OH)₂, that is, Basic Nickel carbonate (xNiCO₃ • yNi(OH)₂ • zH₂O).

Since the content of sulfur in the reaction product is high, the sulfur content can be lowered through the washing process.

In the process of reducing the sulfur content of the reaction product, the reaction product may be repeatedly flushed with water and repeatedly with aqueous NaOH.

For example, washing the reaction product twice in water will remove the sulfur in the form of Na₂SO₄, but unreacted NiSO₄ still remains.

Therefore, the reaction represented by the following reaction formula can be performed by adjusting the pH to 10 or more by adding an aqueous NaOH solution.

NiSO₄ + 2NaOH -> Ni(OH)₂ + Na₂SO₄

Next, the reaction product can be pyrolyzed by calcination at a temperature of 400 °C or more for 30 minutes or more.

It can be removed with water in the reaction product and can be carried out in a rotary kiln.

The pyrolysis reaction of the reaction product can be expressed by the following reaction formula.

NiCO₃ -> NiO + CO₂

3Ni(OH)₂^{∗}2NiCO₃ -> 5NiO + 3H₂O + 2CO

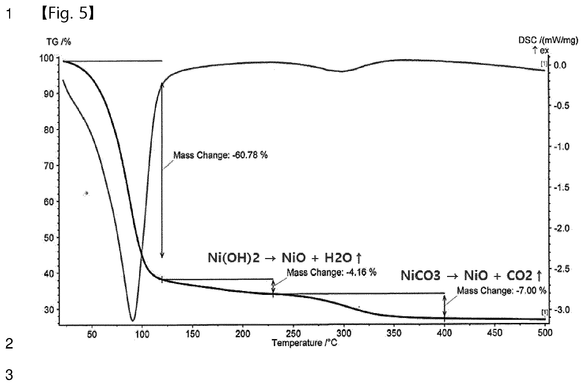

As can be seen from FIG. 5, when water and crystal water evaporate at a calcination temperature of 120 °C or higher, crystal water and hydroxide decompose at 230 °C or higher, and NiCO₃ decomposes at 400 °C or higher to complete the production of nickel oxide (NiO).

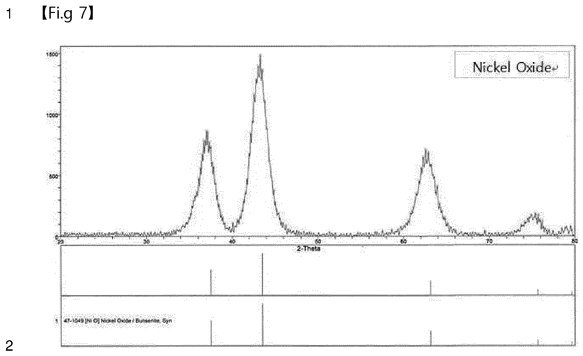

Through the above process, a nickel oxide having crystallinity can be obtained as shown in FIG. 7.

Finally, in the step of producing the nickel product, the nickel oxide may be charged into an electric furnace together with cokes and the like, and then reduced at a temperature of 1,500 to 1,700 °C.

Accordingly, it is possible to produce nickel having a purity of 97% or more.

The process is simplified, and nickel of purity suitable for the production of stainless steel can be produced instead of unnecessarily excessive purity by applying the hydrometallurgical process and the pyrometallurgical method simultaneously.

As a result, the manufacturing cost can be reduced and the productivity can be improved.

Hereinafter, specific examples of the present invention will be described.

However, the following examples are only a concrete example of the present invention, and the present invention is not limited to the following examples.

### Example

### [Preparation and Composition of Nickel Product]

### (1) Mixed hydroxide production

In the autoclave, the Laterite ore was dissolved in sulfuric acid.

The temperature at this time was 250 °C and the pressure was 44 atm.

About 350 kg/T Ni was added to the sulfuric acid.

CaO was added to the leachate in which Laterite ore was leached into sulfuric acid to remove impurities first.

Then, MgO was further added to prepare mixed hydroxides containing nickel and impurities.

The compositions of the mixed hydroxides were as follows.

The total weight is expressed as 100%, and the remainder is composed of other unavoidable impurities.
Ni: 40%, Co: 0.04%, Fe: 0.01%, Si: 0.15%, Mg: 0.55%, Mn: 0.02%, Cu: 0.01%, Zn: 0.01%, Cr: 0.01%, Na: 2.5%, S: 2.0%

It can be confirmed that the content of impurities other than nickel is high.

### (2) Separation of impurities

Mixed hydroxide was dissolved by sulfuric acid to prepare a solution.

The reaction temperature was 60 °C, and the reaction was carried out for about 3 hours.

The pH of the solution was adjusted to 1.2.

Then, cyanex 272 was added to the solution, and Na₂CO₃ was added thereto to adjust the pH to 5.2 of the mixed solution with the solution and the organic mattter.

The organic compound was removed from the solution in which the dissolution solution and organic matter were mixed to prepare a raffinate.

### (3) Obtaining nickel oxide

Na₂CO₃ was added to the raffinate to form a reaction product.

The pH of the solution was adjusted to be 8, and at this time the reaction temperature was 70 °C, and the reaction was carried out for about 3 hours.

Thereafter, the reaction product was washed twice with an aqueous solution prepared by adding NaOH to pH 10 to reduce the content of sulfur in the reaction product.

The composition of the reaction product is as follows.

The total weight is expressed as 100%, and the remainder is composed of other unavoidable impurities.
Ni: 45%, Co: 0.044%, Fe: 0.0005%, Si: 0.15%, Mg: 0.59%, Mn: 0.001%, Cu: 0.006%, Zn: 0.01%, Na: 0.1%, S: 0.05%

It is confirmed that the content of nickel is increased because sodium and sulfur components are removed during the washing process.

Next, the reaction product was calcined at about 400 °C for 1 hour to obtain nickel oxide.

The composition of nickel oxide is as follows.

The total weight is expressed as 100%, and the remainder is composed of other unavoidable impurities.
Ni: 70%, Co: 0.1%, Fe: 0.001%, Si: 0.3%, Mg: 1.0%, Mn: 0.002%, Cu: 0.01%, Zn: 0.02%

The nickel content was increased, and the impurity content was further decreased.

### (4) Production of nickel products

The previously prepared nickel product was charged into an electric furnace together with coke and reduced at about 1,600 °C to complete the production of the nickel.

The composition of the nickel product is as follows.

The total weight is expressed as 100%, and the remainder is composed of other unavoidable impurities.
Ni: 97%, Co: 0.1%, Fe: 0.001%, Si: 0.1%, Mg: 0.01%, Mn: 0.002%, Cu: 0.01 %, Zn: 0.02 %

It can be confirmed that the content of nickel is 97% or more, and the content of impurities is low.

### [Preparation and Composition of Cobalt Product]

A stripping process was performed by adding a sulfuric acid to the organic compound formed in the nickel production process.

NaSH was added to the stripping solution thus a CoS containing cobalt product was prepared.

At this time, the reaction temperature was about 85 °C, and the reaction was carried out for about 3 hours.

The pH of the stripping solution containing NaSH was adjusted to 4.5.

The composition of the cobalt product is as follows.

The total weight is expressed as 100%, and the remainder is composed of other unavoidable impurities.
Co: 40%, S: 30%, Zn: 7.33%, Ni: 0.060%, Mg: 0.25%, Mn: 3.56%

It can be confirmed that the content of cobalt is high and the content of impurities is low.

It will be understood by those skilled in the art that various changes in form and details may be made therein without departing from the spirit and scope of the present invention as defined by the following claims and their equivalents. It will be understood that the invention may be embodied in other specific forms without departing from the spirit or scope of the invention.

It is therefore to be understood that the embodiments and/or the examples described above are illustrative in all aspects and not restrictive.

## Claims

1. An economical nickel recovery process combining hydrometallurgical and pyrometallurgical processes from nickel oxide ore, comprising:
preparing a solution by dissolving a mixed hydroxide comprising nickel and impurities in a strong acid;
separating impurities by introducing an organic material into the solution;
obtaining a nickel oxide by introducing a first neutralizing agent into a raffinate in which the impurities are separated, and calcining the raffinate; and
producing a nickel product by reducing the nickel oxide.

2. The process of the Claim 1,
prior to the step of preparing the solution,
the process further comprises:
producing the mixed hydroxide by leaching a raw material comprising ore into a strong acid and neutralizing.

3. The process of Claim 1,
wherein, the step of separating the impurities comprises:
preparing an organic compound comprising the impurities by adding an organic material to the solution; and
preparing a raffinate by separating the organic compound.

4. The process of Claim 3,
wherein, the step of preparing the organic compound comprises:
adjusting the pH of the solution to 4 to 6 by adding Na₂CO₃ to the solution into which the organic material is added.

5. The process of Claim 3,
after the step of preparing the raffinate,
the process further comprises:
preparing a stripping solution by adding sulfuric acid to the organic compound; and
forming a cobalt precipitate by introducing a second neutralizing agent into the stripping solution.

6. The process of Claim 5,
in the step of forming the cobalt precipitate,
wherein, the second neutralizing agent is Na₂CO₃, and a first cobalt product comprising CoCO₃ is obtained.

7. The process of Claim 5,
in the step of forming the cobalt precipitate,
wherein, the second neutralizing agent is NaSH, and a second cobalt product comprising CoS is obtained.

8. The process of Claim 7,
a pH of the stripping solution to which NaSH is added is adjusted to 4 to 5.

9. The process of Claim 1,
the step of obtaining the nickel oxide comprises:
preparing a reaction product by reacting the raffinate and the first neutralizing agent at a temperature of 70 °C or higher;
reducing a sulfur content in the reaction product by washing the reaction product; and
obtaining a nickel oxide by calcining the reaction product in which sulfur content is reduced.

10. The process of Claim 9,
in the step of preparing the reaction product,
wherein, the first neutralizing agent is Na₂CO₃ and a pH of the solution comprising the reaction product is adjusted to 7 to 9.

11. The process of Claim 9,
in the step of reducing the sulfur content,
the reaction product is repeatedly washed with water comprising NaOH.

12. The process of Claim 9,
in the step of obtaining a nickel oxide by calcining the reaction product,
the reaction product is calcined and pyrolyzed at a temperature of 400 °C or more for 30 minutes or more.

13. The process of Claim 1,
in the step of preparing a solution,
wherein, the strong acid is sulfuric acid and a pH of the solution is adjusted to 1 to 2.

14. The process of Claim 2,
wherein, the step of producing the mixed hydroxide comprises:
preparing an leachate by pressurizing and leaching the raw material into sulfuric acid;
producing a neutralized filtrate by adding CaO or CaCO₃ to the leachate; and
producing the mixed hydroxide by adding MgO to the neutralized filtrate.

15. The process of Claim 1,
in the step of producing the nickel product,
the nickel oxide is charged into an electric furnace and reduced at a temperature of 1,500 to 1,700 °C.
